# EUROPÄISCHE PATENTANMELDUNG

(11) **EP 2 093 663 A1**
(43) Veröffentlichungstag der Anmeldung: **26.08.2009**
(21) Anmeldenummer: 08003039.8
(22) Anmeldetag: 19.02.2008
(51) Int. Cl.: G06F 9/44

(54) **Engineering-System für die Entwicklung eines Projektes und Verfahren**

(71) Anmelder: SIEMENS AKTIENGESELLSCHAFT, 80333 München (DE)
(72) Erfinder: Linke, Stefan, 90475 Nürnberg (DE)

(57) **Zusammenfassung**

Ein Engineering-System für die Entwicklung eines Projektes (101) im Automatisierungsumfeld mit einer Projektübersicht, einer Projektdatenbank, zumindest einem ersten Entwicklungs-Werkzeug (111) für die Entwicklung einer ersten Art von Objekten (120), wobei die Anwesenheit eines oder einer Mehrzahl von unterschiedlichen Entwicklungs-Werkzeugen (111,112) unterschiedliche Systemkonfigurationen bildet, miteinander in einer Beziehung stehende Objekte (120,121), wobei die Objekte (121,122) und ihre Beziehungen zueinander in der Projektdatenbank (103) speicherbar sind, wobei die Objektart der Objekte, sowie die Eigenschaften der Beziehungen mittels des dieser Objektart zugehörigen Entwicklungs-Werkzeuges (111, 112) festgelegt ist, und wobei die Objekte in der Projektübersicht (102) abgebildet sind und mit den in der jeweiligen Systemkonfiguration vorhandenen Entwicklungs-Werkzeugen (111, 112) modifizierbar sind, weist zur Sicherstellung der Datenkonsistenz innerhalb des Projektes Bearbeitungs-Mittel (113) und Kennzeichnungs-Mittel (114) auf. Mittels der Bearbeitungs-Mittel (113) zum Anwenden von Operationen auf ein Objekt bei einer ersten Systemkonfiguration zu einem ersten Zeitpunkt bei Abwesenheit des zugehörigen Entwicklungs-Werkzeuges und Kennzeichnungs-Mittel (114) zum Kennzeichnen des Objektes nach ausgeführter Operation für eine spätere funktionelle Integration bzw. Elimination des veränderten Objektes in das bzw. aus dem Projekt (101) bei Anwesenheit des zugehörigen Entwicklungs-Werkzeuges (111,112) kann zu einem zweiten Zeitpunkt die Datenkonsistenz in dem Projekt gewährleistet werden.

## Beschreibung

Die Erfindung betrifft ein Engineering-System für die Entwicklung eines Projektes im Automatisierungsumfeld, mit den Merkmalen des Oberbegriffes des Patentanspruches 1. Des Weiteren betrifft die Erfindung ein Verfahren zum Bearbeiten eines Objektes in einem Engineering-System für die Entwicklung eines Projektes im Automatisierungsumfeld mit den Merkmalen des Oberbegriffes des Patentanspruches 6.

In der Automatisierungstechnik werden Engineering-Systeme zum Konfigurieren und Projektieren kompletter Automatisierungslösungen für eine vollständige Prozessindustrieanlage eingesetzt. Solch ein Engineering-System kann aus unterschiedlichen Engineering-Werkzeugen, wie beispielsweise ein Werkzeug zur Programmierung der Automatisierungsgeräte, ein Werkzeug zur Programmierung und Projektierung von Leitsystemen oder Bedien- und Beobachtungssystemen, ein Werkzeug zur Programmierung und Projektierung von drehzahlveränderlichen Antrieben, bestehen. Diese Engineering-Werkzeuge können von einem Anwender sowohl einzeln als auch zusammen in einer Systemkonfiguration auf beispielsweise einem einzigen Rechner verwendet werden. Die einzelnen Engineering-Werkzeuge sind dabei vorzugsweise ein Bestandteil des Engineering-Systems, welches vorzugsweise eine gemeinsame Plattform für die unterschiedlichen Engineering-Werkzeuge darstellt. Von den einzelnen Engineering-Werkzeugen werden bei der Erstellung einer Automatisierungslösung durch den Anwender Objekte wie z.B. HMI-Bedienbilder, Kommunikationsverbindungen, Variablen oder Hardware-Module mit Projektierungsdaten erzeugt. Diese Projektierungsdaten werden in einer gemeinsamen Projektdatenbank gespeichert. Die erzeugten Objekte werden vorzugsweise in einem Objektmodell für eine gemeinsame Datenhaltung der Projektdaten gehalten, wobei im Engineering-System vorzugsweise eine Projektübersicht in Form von einem Projektbaum mit den im Projekt enthaltenen Engineering-Objekten angeboten wird.

Aus den erzeugten Daten für die einzelnen Objekte werden nach Abschluss der Projektierung für reale Zielgeräte, z.B. ein Automatisierungsgerät in Form einer speicherprogrammierbaren Steuerung für eine Produktionsanlage, so genannte "Run-Time"-Daten generiert. Diese Run-Time-Daten entsprechen einem maschinenlesbaren Programm, welches zur Laufzeit in den unterschiedlichen Automatisierungsgeräten ausgeführt wird. Bei der Generierung der Run-Time-Daten werden nicht nur die von einem einzigen Engineering-Werkzeug erstellten Daten ausgewertet, sondern es werden alle Daten, d.h., auch die erstellten Daten der anderen Engineering-Werkzeuge für die Generierung der Run-Time-, also den Laufzeit-Daten, für die komplette zu automatisierende Prozessindustrieanlage erzeugt.

Insbesondere in größeren Projekten werden oft eine Vielzahl von Engineering-Werkzeugen für die Erstellung eines Projektes verwendet. Dabei arbeiten in der Regel unterschiedliche Anwender an unterschiedlichen Aufgaben. Beispielsweise erstellt eine erste Entwicklungsgruppe Controller-Programme und eine zweite Entwicklungsgruppe ist für das Bedien- und Beobachtungssystem verantwortlich und erstellt HMI-Projektierungen. Dieses zudem noch auf unterschiedlichen Entwicklungsrechnern.

Aus Kostengründen, beispielsweise Lizenzkosten und Softwareanschaffungskosten, besitzt nicht jeder Anwender dabei immer alle Engineering-Werkzeuge. Benötigt beispielsweise ein Entwickler für die Controller-Programme ein Bild der HMI-Projektierung um dort beispielsweise einen Verbindungsstatus seiner projektierten Verbindungsdaten darzustellen, so muss er im Besitz des jeweiligen Entwicklungs-Werkzeuges für HMI-Projekte sein. Es sollte also für jeden Anwender möglich sein, einzelne Objekte aus der Projektübersicht zu kopieren, verschieben oder zu löschen, ohne dass das jeweilige Engineering-Werkzeug installiert ist. Insbesondere in technologisch ausgerichteten Projektübersichten sind derartige Aktionen typische Anwendungsfälle. Aus einem Projekt können beispielsweise aus einem Teilbaum Teilanlagen oder der ganze Baum kopiert werden und in einer anderen, ähnlich konfigurierten, Teilanlage wieder eingesetzt werden. Es muss dabei gewährleistet sein, dass die Daten sämtlicher Objekte nach dem Kopiervorgang in einem definierten Zustand hinterlassen werden. Dazu müssten allerdings alle Engineering-Werkzeuge, die für die Erstellung der Teilanlage benötigt wurden, installiert sein.

Bei den bisher bekannten Engineering-Systemen ist es nicht möglich, Operationen auf die in der Projektübersicht dargestellten Objekte auszuüben, ohne dass die Engineering-Werkzeuge der davon betroffenen Objekte installiert sind. Bei heutigen Engineering-Systemen wird in dem Projekt hinterlegt, von welchen Engineering-Werkzeugen Daten oder Objekte im Projekt liegen. Beim Öffnen dieses Projektes wird diese Information herangezogen um zu ermitteln, ob auf dem zugehörigen Rechner diese benötigten Engineering-Werkzeuge installiert sind. Ist dies nicht der Fall, erhält der Anwender beim Öffnen des Projektes eine Meldung über die fehlenden Engineering-Werkzeuge. Beschließt der Anwender jetzt dennoch mit dem Projekt zu arbeiten, ohne vorher die fehlenden Engineering-Werkzeuge zu installieren, so geht er die Gefahr ein, die Projektdaten zu zerstören.

Es ist daher die Aufgabe der Erfindung dem Anwender ein System bereitzustellen, welches ihm erlaubt, mit dem Projekt und den in ihm enthaltenen Objekten zu arbeiten, auch wenn er nicht im Besitz aller Engineering-Werkzeuge ist.

Bei dem Engineering-System mit der Merkmalskombination nach dem Oberbegriff des Patentanspruches 1 wird die Aufgabe dadurch gelöst, dass das Engineering-System Bearbeitungs-Mittel zum Anwenden von Operationen auf ein Objekt bei einer ersten Systemkonfiguration zu einem ersten Zeitpunkt bei Abwesenheit des zugehörigen Entwicklungs-Werkzeuges und Kennzeichnungs-Mittel zum Markieren des Objektes nach ausgeführter Operation für eine spätere funktionelle Integration bzw. Elimination des veränderten Objektes in das bzw. aus dem Projekt bei Anwesenheit des zugehörigen Entwicklungs-Werkzeuges zu einem zweiten Zeitpunkt zur Gewährleistung der Datenkonsistenz in dem Projekt aufweist. Auf die Objekte in dem Projekt können nun durch die Bearbeitungs-Mittel Operationen angewendet werden, ohne die Anwesenheit der den Objekten zugeordneten Engineering-Werkzeuge und die Kennzeichnungs-Mittel hinterlassen die Objekte in einem Zustand, der eine Weiterarbeit an dem Projekt durch den Anwender ohne die Gefahr der Zerstörung des Projektes bzw. seiner Daten oder eine inkonsistente Datenhaltung innerhalb des Projektes ermöglicht. Unter Anwendung von Operationen ist hier beispielsweise das Kopieren, Verschieben oder Löschen von Objekten in der Projektübersicht gemeint. Dabei ist vorzugsweise eine generische Hantierung der Objekte bis zu einer bestimmbaren Granularität des Objektmodells möglich, beispielsweise kann die Hantierung aller in der Projektübersicht bzw. in der Baumstruktur des Projektes angezeigten Objekte erfolgen.

In einer bevorzugten Ausgestaltung der Erfindung weist das Engineering-System ein Basis-Entwicklungssystem auf. Dieses Basis-Entwicklungssystem bildet eine Plattform für das gesamte Engineering-System. Das Basis-Entwicklungssystem stellt dabei sämtliche Schnittstellen zu den unterschiedlich zu installierenden Engineering-Werkzeugen bereit.

In einer weiteren vorteilhaften Ausgestaltung der Erfindung weist ein Objekt, auf dem eine Operation ausgeführt wurde, ein Anzeigemittel zur Anzeige der Kennzeichnung auf. Mit dieser Kennzeichnung über das Anzeigemittel ist das veränderte Objekt oder die veränderte Teilanlage für den Projekteur der Automatisierungsanlage leichter zu erkennen und er wird dadurch benachrichtigt, dass die Projektierung für die Automatisierungsanlage noch nicht abgeschlossen ist. Er wird also darüber informiert, dass er abschließend noch auf einem beispielsweise zentralen Rechner, bei dem alle Entwicklungs-Werkzeuge installiert sind, einen Abschlusslauf für das Projekt durchführen muss. Mit diesem Abschlusslauf werden an den zuvor nur als ein Datenpaket duplizierten Objekten die notwendigen Korrekturen für konsistente Daten durchgeführt.

Weiterhin ist es vorteilhaft für das System, dass das Basis-Entwicklungssystem Grundfunktionen der unterschiedlichen Entwicklungs-Werkzeuge aufweist. Diese Grundfunktionen ermöglichen es, die in einem Projekt enthaltenen Objekte mindestens für die Granularität der Darstellung in der Projektübersicht zu instanzieren und die entsprechenden Attribute, wie z.B. Objektname und Ikone, zu lesen.

Verfahrenstechnisch wird die eingangs genannte Aufgabe durch ein Verfahren mit den Merkmalen des Oberbegriffs des Patentanspruches 6 dadurch gelöst, dass bei einer ersten Systemkonfiguration zu einem ersten Zeitpunkt von einem ausgewählten Objekt bei Abwesenheit des zugehörigen Entwicklungs-Werkzeuges, die Eigenschaften des ausgewählten Objektes gelesen werden und es instanziert wird und die Beziehungen dieses Objektes zu einer Objekthierarchie ermittelt werden, wobei das instanzierte Objekt in eine zweite Umgebung abgespeichert wird und die Beziehungen und die Eigenschaften dem Objekt in der zweiten Umgebung vererbt werden. Als Instanzierung / Instanzieren wird in der objektorientierten Programmierung das Erzeugen eines Objektes einer bestimmten Klasse bezeichnet. Eine Klasse entspricht dabei einem abstrakten Datentyp, an welchem außerdem Funktionen gekoppelt sind. Diese Funktionen können sich auch durch Beziehungen zu anderen Objekten oder Datentypen ausdrücken. Auf vorteilhafte Weise können so Objekte aus dem Projektbaum der Projektübersicht kopiert und z.B. in Teilanlagen wieder eingefügt werden. Dieses Kopieren oder generell die Anwendung einer Operation auf die Objekte ist nun auch ohne die Anwesenheit des jeweiligen Entwicklungs-Werkzeuges möglich. Unter Anwesenheit des Entwicklungs-Werkzeuges ist zu verstehen, dass das Entwicklungs-Werkzeug auf einem Rechner, beispielsweise als Optionsmodul zu dem Engineering-System, installiert ist.

In einer vorteilhaften Weiterführung des Verfahrens werden für eine funktionelle Integration bzw. Elimination des veränderten Objektes in das bzw. aus dem Projekt bei Anwesenheit des zugehörigen Entwicklungs-Werkzeuges zu einem zweiten Zeitpunkt die Korrekturen an dem Objekt durchgeführt. Durch das Kennzeichnungsmittel kann nach Anwendung einer Operation auf ein Objekt dieses gekennzeichnet werden und anhand der Kennzeichnung mit dem später vorhandenen zugehörigen Entwicklungs-Werkzeug, welches beispielsweise durch eine Nachinstallation hinzugefügt wurde, können nun die Korrekturen an dem Objekt durchgeführt werden. Mithilfe dieser Korrekturen ist abschließend bei dem Gesamtprojekt für die Automatisierungslösung die Datenkonsistenz sichergestellt und ein Datenverlust wird vermieden.

Weiterhin ist es vorteilhaft, dass das Objekt von mit in einem Basis-Entwicklungssystem enthaltenen Grundfunktionen erstellt wird. Vorzugsweise enthält das Basis-Engineeringsystem gemeinsame Grundfunktionen für alle Engineering-Werkzeuge und wird als eine spezifische Systemkonfiguration mit einem gewünschten Engineering-Werkzeug bereitgestellt.

Zweckmäßig ist es, dass das Objekt kopiert, verschoben oder gelöscht werden kann.

Im Weiteren werden mit Bezugsnahme auf die nachfolgend angeführten Zeichnungen Ausführungsbeispiele der Erfindung und die damit verbundenen Vorteile näher erläutert. Dabei zeigen:
- FIG 1: ein Projekt mit Objekten aus unterschiedlichen Engineering-Werkzeugen,
- FIG 2: eine technologische Sicht auf ein Projekt,
- FIG 3: ein Ergebnis nach einem Kopiervorgang von Objekt B,
- FIG 4: eine Systemkonfiguration mit Schnittstellen und
- FIG 5: die Objekte nach erfolgreicher Korrektur.

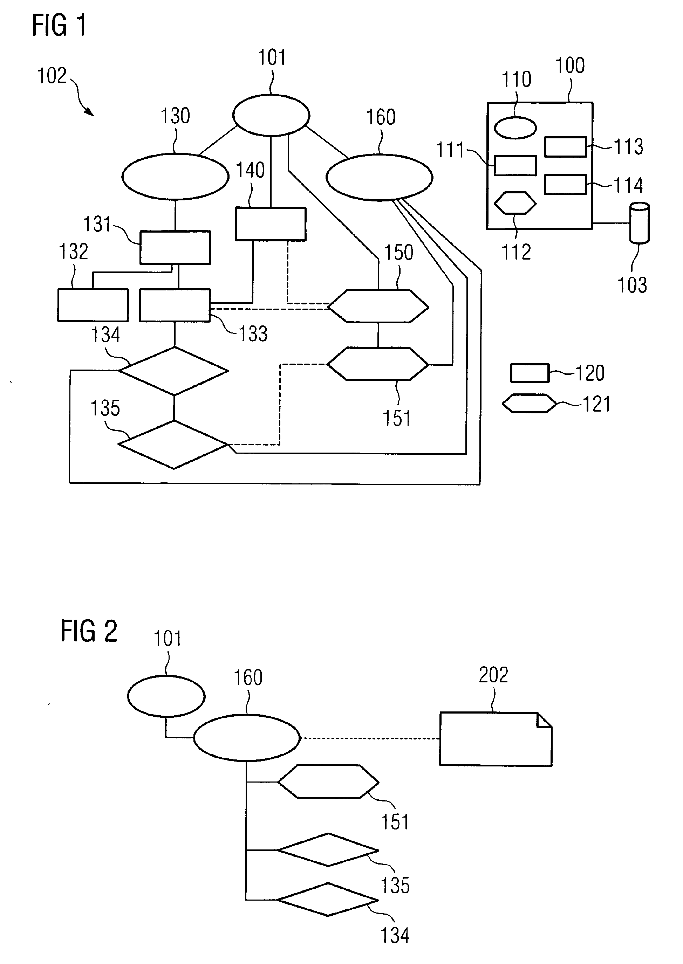

Gemäß FIG 1 ist eine Projektübersicht 102 von einem mit einem Engineering-System 100 erstellten Projekt 101 dargestellt.

Das Engineering-System 100 weist ein Basis-Entwicklungssystem 110, ein erstes Entwicklungs-Werkzeug 111 und ein zweites Entwicklungs-Werkzeug 112 auf. Ein Bearbeitungsmittel 113 und ein Kennzeichnungsmittel 114 werden dabei zur Koordination einer konsistenten Datenhaltung eingesetzt. Das Engineering-System 100 weist weiterhin eine Projektdatenbank 103 auf. Die Struktur des Projektes 101 ist als eine Baumstruktur mit einer Projektwurzel und seinen untergeordneten Objekten dargestellt. Der Projektwurzel, welche gleichzeitig das Projekt 101 darstellt, ist ein Geräteordner 130 und ein Technologieordner 160 untergeordnet. Die Ellipsenform der zuvor genannten Objekte deutet an, dass sie mit dem Basis-Entwicklungssystem 110 erstellt wurden. Analog dazu sind nachfolgend die rechteckigen Objekte mit einem ersten Entwicklungs-Werkzeug 111 und die rautenförmigen Objekte mit einem zweiten Entwicklungs-Werkzeug 112 erstellt worden. Ein Netzwerk 140 ist dem Projekt 101 an seiner Wurzel angeordnet. Der Geräteordner 130 weist als ein Unterobjekt ein Gerät 131 auf. Das Gerät 131 besteht wiederum aus Unterobjekten, einer Ein-/Ausgabebaugruppe 132 und einer CPU 133. Die CPU 133 weist Programmobjekte auf, nämlich das Programm 134, dem wiederum eine Variable 135 untergeordnet ist. Weitere Objekte, welche mit den zweiten Entwicklungs-Werkzeug 112 erstellt wurden, sind als ein Bediengerät 150 und ein Bedienbild 151 abgebildet. Die durchgezogenen und gestrichenen Verbindungslinien zwischen den Objekten repräsentieren dabei die Beziehung zwischen den einzelnen Objekten, wie sie durch die Nutzung von unterschiedlichen Entwicklungs-Werkzeugen entstehen.

FIG 2 zeigt eine technologische Sicht auf Projekt 101, wobei der Technologieordner 160 eine Teilanlage 202 repräsentiert. In dieser Teilanlage 202 werden die Objekte angezeigt, die im Projekt in FIG 1 auch eine Beziehung zum Technologieordner 160 haben und teilweise mit unterschiedlichen Entwicklungs-Werkzeugen erstellt wurden. In Projekt 101 ist das bereits aus FIG 1 bekannte Bedienbild 151 wieder sichtbar. Das Bedienbild 151 ist mit dem zweiten Entwicklungs-Werkzeug 112 in Projekt 101 aus FIG 1 erstellt worden. Auch die Objektvariable 135 und Programm 134 aus FIG 1 sind hier sichtbar.

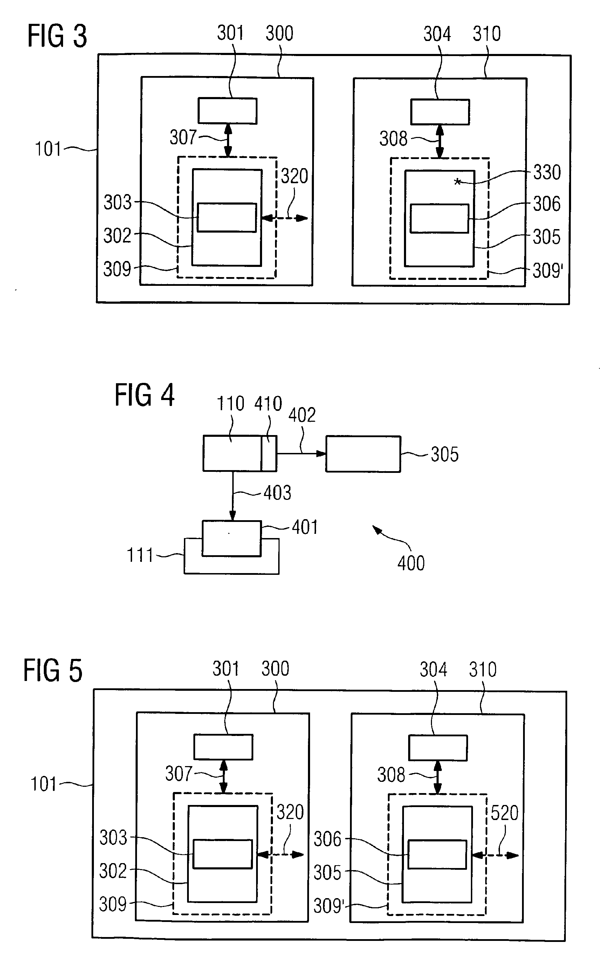

Mit der FIG 3 wird der Kopiervorgang eines Objektes beschrieben. Das Projekt 101 enthält ein Objekt A 301, ein Objekt B 302, ein Objekt C 303 und ein Objekt D 304. Das Objekt B 302 weist ein weiteres dem Objekt B zugeordnetes Objekt C 303 auf. Das Objekt B 302 bildet mit dem Objekt C 303 eine Einheit 309. Da das Objekt C 303 dem Objekt B 302 untergeordnet ist, werden die Operationen, welche eigentlich auf Objekt B 302 angewendet werden sollen, auf die Einheit 309 angewendet.

Die Beziehung AB 307 stellt z.B. Abhängigkeiten von internen Werten von Objekt B zu Werten oder Attributen des Objektes A dar. Das Objekt A 301 ist damit ein überlagertes Vaterobjekt zu dem Objekt B 302. Die Beziehung 307 wird vom Basis-Entwicklungssystem 110 aus FIG 1 erstellt. Die Beziehung 320 stellt eine weitere Beziehung von Objekt B 302 zu den dem Objekt B 302 zugeordneten Objekten dar. Für das Anwenden von Operationen auf das Objekt B 302 mit seiner Beziehung 320 ist jedoch die Anwesenheit des zugehörigen Entwicklungs-Werkzeuges notwendig. Erfindungsgemäß kann das Objekt B 302 jedoch auch ohne die Anwesenheit des ihm zugehörigen Entwicklungs-Werkzeuges in eine zweite Umgebung 310 kopiert werden. Die Einheit 309 wird instanziert und in der zweiten Umgebung 310 als eine weitere Einheit 309' einem Objekt D 304 mit der Beziehung DB1 308 zugeordnet. In der Einheit 309' entsteht so ein Objekt B1 305 mit einem untergeordneten Objekt C1 306. Da das Objekt B1 305 ohne die Anwesenheit des ihm zugehörigen Entwicklungs-Werkzeuges erstellt wurde, erhält es eine Kennzeichnung 330.

Gemäß FIG 4 ist eine Systemkonfiguration 400 dargestellt. Diese Systemkonfiguration 400 weist das aus FIG 1 bekannte Basis-Entwicklungssystem 110 und das aus FIG 1 weiterhin bekannte erste Entwicklungs-Werkzeug 111 auf. Das erste Entwicklungs-Werkzeug 111 ist mit einer Business-Logic 401 für Objekt B 302 ausgestaltet. Das Basis-Entwicklungssystem 110 kann über einen Schnittstellenaufruf 403 über die Business-Logic 401 mit dem ersten Entwicklungs-Werkzeug 111 Daten austauschen. Das Basis-Entwicklungssystem 110 verfügt über Grundfunktionen 410. Mittels dieser Grundfunktionen 410 können über einen Grundfunktionsaufruf 402 das aus FIG 3 bekannte Objekt B1 305 und weitere Objekte dieser Objektart erstellt werden. Mit der FIG 4 sind die wesentlichen Komponenten, welche für die in FIG 3 und FIG 5 aufgezeigte Operation am Beispiel einer Kopieroperation beteiligt sind, angegeben. Das Basis-Entwicklungssystem 110 ist derart ausgestaltet, dass die gewünschte Operation (z.B. Kopieren, Verschieben, Löschen) auf das Objekt B 302 aus FIG 4 generisch, d.h. ohne die für Objekt B 302 zugehörige Business-Logic, welche Bestandteil des nicht installierten ersten Entwicklungs-Werkzeuges 111 ist, durchzuführen. Um jedoch die in FIG 3 gezeigte Beziehung 320 berücksichtigen zu können, wird das Basis-Entwicklungssystem 110 versuchen, über eine definierte Schnittstelle die Business-Logic für das Objekt B aufzurufen, um die notwendigen Korrekturen zu machen. Ist diese Schnittstelle jedoch nicht vorhanden, so setzt das Basis-Entwicklungssystem eine so genannte "dirty"-Kennzeichnung 330 für das "generisch" hantierte Objekt B.

Bei einem Zugriff auf Objekt B1 305 kann die "dirty"-Kennzeichnung 330 des Objektes B1 305 abgefragt werden. Damit können die Verwender, beispielsweise Clients, von Objekt B1 305 entscheiden, ob sie mit diesem Objekt arbeiten können oder nicht. Der erste Fall wäre z.B. gegeben, wenn das Objekt B1 305 in einer Projektübersicht eines Clients dargestellt werden soll. Damit ist eine Darstellung/Visualisierung für den Anwender des Clients möglich, also während der Darstellung des Objektes B1 wird auch der Zustand der Kennzeichnung 330 in der Projektübersicht angezeigt. Sollte ein Verwender nicht mit "dirty"-Objekten arbeiten können, so muss er in diesem Fall die entsprechende Aktion oder Operation abbrechen.

Eine Entfernung der "dirty"-Kennzeichnung 330 erfolgt durch die für ein Objekt zuständige Business-Logic-Komponente des zugehörigen Entwicklungs-Werkzeuges. Wird ein Projekt, in welchem "dirty" gekennzeichnete Objekte enthalten sind, mit einem Engineering-System geöffnet, in dem das zuständige Entwicklungs-Werkzeug für das mit "dirty" gekennzeichnete Objekt nicht enthalten ist, so kann hier auf unterschiedliche Arten eine Korrektur angestoßen werden. Dies kann z.B. automatisch beim Öffnen des Projektes erfolgen oder beim erstmaligen Zugriff auf ein mit "dirty" gekennzeichnetes Objekt oder durch eine explizit angestoßene Aktion durch den Anwender. Die entsprechende Business-Logic kann dabei anhand der "dirty"-Kennzeichnung die Objekte mit Korrekturbedarf ermitteln.

Zur Korrektur eines als "dirty" markierten Objektes können Zusatzinformationen, welche zuvor an dem Objekt hinterlegt wurden, genutzt werden. Die Objekte werden also um Zusatzinformationen bezüglich der originalen Umgebung angereichert, wenn eine Operation durchgeführt wird, bei denen sie als "dirty" gekennzeichnet werden.

In der FIG 5 ist das Ergebnis der Kopieraktion aus FIG 3 dargestellt. Voraussetzung für die Erreichung des Ergebnisses ist die Anwesenheit des zugehörigen Entwicklungs-Werkzeuges für Objekte der Objektart B. Beziehungen 520 innerhalb der neuen Umgebung 310 sind anhand der Korrekturmaßnahme, welche auf die durch das Kennzeichnungsmittel gekennzeichneten Objekte durch die zu einem späteren Zeitpunkt vorhandenen Entwicklungswerkzeuge ausgeführt werden, nun hergestellt.

## Patentansprüche

1. Engineering-System (100) für die Entwicklung eines Projektes (101) im Automatisierungsumfeld mit
• einer Projektübersicht (102),
• einer Projektdatenbank (103),
• zumindest einem ersten Entwicklungs-Werkzeug (111) für die Entwicklung einer ersten Art von Objekten (120), wobei die Anwesenheit eines oder einer Mehrzahl von unterschiedlichen Entwicklungs-Werkzeugen (111,112) unterschiedliche Systemkonfigurationen bildet,
• miteinander in einer Beziehung stehende Objekte (120,121),
wobei die Objekte (121,122) und ihre Beziehungen zueinander in der Projektdatenbank (103) speicherbar sind, wobei die Objektart der Objekte, sowie die Eigenschaften der Beziehungen mittels des dieser Objektart zugehörigen Entwicklungs-Werkzeuges (111,112) festgelegt ist, und wobei die Objekte in der Projektübersicht (102) abgebildet sind und mit den in der jeweiligen Systemkonfiguration vorhandenen Entwicklungs-Werkzeugen (111,112) modifizierbar sind,
**gekennzeichnet durch**
• Bearbeitungs-Mittel (113) zum Anwenden von Operationen auf ein Objekt (120,121) bei einer ersten Systemkonfiguration zu einem ersten Zeitpunkt bei Abwesenheit des zugehörigen Entwicklungs-Werkzeuges (111,112) und
• Kennzeichnungs-Mittel (114) zum Kennzeichnen des Objektes nach ausgeführter Operation für eine spätere funktionelle Integration bzw. Elimination des veränderten Objektes in das bzw. aus dem Projekt (101) bei Anwesenheit des zugehörigen Entwicklungs-Werkzeuges (111,112) zu einem zweiten Zeitpunkt
zur Gewährleistung der Datenkonsistenz in dem Projekt (101).

2. System nach Anspruch 1, wobei ein Basis-Entwicklungssystem (110), vorhanden ist.

3. System nach Anspruch 1 oder 2, wobei ein Objekt ein Anzeigemittel zur Anzeige der Kennzeichnung (330) aufweist.

4. System nach einem der Ansprüche 1 bis 3, wobei das Objekt mit dem Anzeigemittel in der Projektübersicht (102) dargestellt ist.

5. System nach einem der Ansprüche 2 bis 4, wobei das Basis-Entwicklungssystem (110) Grundfunktionen der unterschiedlichen Entwicklungs-Werkzeuge (111,112) aufweist.

6. Verfahren zum Bearbeiten eines Objektes (120,121) in einem Engineering-System (100) für die Entwicklung eines Projektes im Automatisierungsumfeld, wobei mit
• unterschiedlichen Entwicklungs-Werkzeugen (111,112) unterschiedliche Arten von Objekten (120,121) erstellt werden,
• wobei die Anwesenheit eines oder einer Mehrzahl von unterschiedlichen Entwicklungs-Werkzeugen (111,112) unterschiedliche Systemkonfigurationen (100) bildet,
• die Objekte miteinander in Beziehungen gesetzt werden,
• wobei die Objekte und ihre Beziehungen zueinander in der Projektdatenbank (103) gespeichert werden
• **dadurch gekennzeichnet, dass** bei einer ersten Systemkonfiguration zu einem ersten Zeitpunkt von einem ausgewählten Objekt, bei Abwesenheit des zugehörigen Entwicklungs-Werkzeuges, die Eigenschaften des ausgewählten Objektes gelesen werden und es instanziert wird und die Beziehungen dieses Objektes zu einer Objekthierarchie ermittelt werden, wobei das instanzierte Objekt in eine zweite Umgebung (310) abgespeichert wird und die Beziehungen und die Eigenschaften dem Objekt in der zweiten Umgebung vererbt werden und das Objekt für eine spätere Nachbearbeitung markiert wird.

7. Verfahren nach Anspruch 6, wobei für eine funktionelle Integration bzw. Elimination des veränderten Objektes (305) in das bzw. aus dem Projekt (101) bei Anwesenheit des zugehörigen Entwicklungs-Werkzeuges zu einem zweiten Zeitpunkt die Korrekturen an dem Objekt (305) durchgeführt werden

8. Verfahren nach Anspruch 6 oder 7,
wobei das Objekt von mit in einem Basis-Entwicklungssystem (110) enthaltenen Grundfunktionen (410) erstellt wird.

9. Verfahren nach einem der Ansprüche 6 bis 8, wobei das Objekt kopiert, verschoben oder gelöscht wird.
